# EUROPEAN PATENT APPLICATION

(11) **EP 1 531 085 A1**
(43) Date of publication of application: **18.05.2005**
(21) Application number: 04254803.2
(22) Date of filing: 10.08.2004
(51) Int. Cl.: B60R 1/10

(54) **Front-viewing system for vehicles**

(30) Priority: 12.11.2003 JP 2003381922
(71) Applicant: Murakami Corporation, Shizuoka-shi, Shizuoka (JP)
(72) Inventor: Matsuura, Masaaki, 748, Hyodauy Fujieda-shi Shizuoka (JP); Sato, Yasuhiro, 748, Hyodauy Fujieda-shi Shizuoka (JP)
(74) Representative: Piésold, Alexander J.

(57) **Abstract**

Disclosed is a front-viewing system (1) for vehicles with high performance and low fabricating costs, by which a driver (H) can indirectly view a region (S2) below a lower limit line (S), the lower limit line (S) denoting a lower limit of an area which the driver can view in the forward direction, and which does not obstacle driver's view obtained directly through a front window (W) when being unnecessary. Further, the front-view system (1) is placed between an eye point of a driver and a front end of the vehicle, and includes a wedge prism which is positioned above the blind spot and which refracts rays traveling from the front end of the vehicle toward the eye point of the driver.

## Description

A system consistent with the present invention relates to a front-viewing system for vehicles, which is used for indirectly viewing a blind spot located in front of a vehicle.

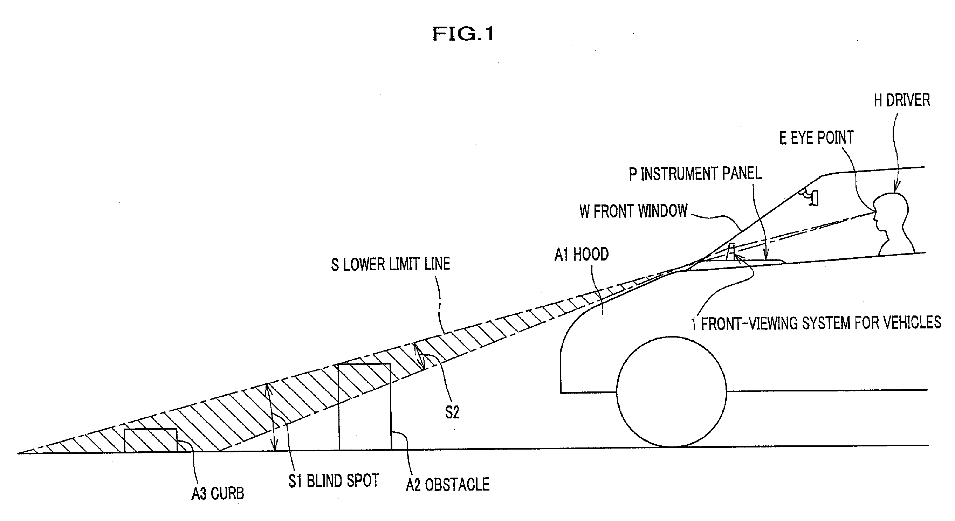

Generally, a typical vehicle such as automobile has a region (blind spot) in front of the vehicle which a driver cannot directly view. This blind spot disturbs safety checking of a driver, especially when the driver puts a vehicle into a garage, or starts a vehicle. To give an example, a car shown in Fig. 1 has a region (blind spot) S1 which a driver H cannot directly view, even if the blind spot S1 is located immediately in front of the car. This means that the driver H cannot realize the existence of an obstacle A2 or a curb A3 inside the blind spot S1. Here, the blind spot S1 denotes a position below a lower limit line S drawn by connecting an eye point E of the driver H with an upper part of an instrumental panel P (or a hood A1, etc.), that is, indicating a lower limit of an area which the driver H can directly view.

In order to eliminate or reduce such blind spot located forward of a vehicle, a front-viewing system for vehicles in which a Fresnel prism is attached on a visor provided on the upper part of a front window has been developed. This system has such a mechanism that rays are refracted by the Fresnel prism, so that a driver can indirectly view a region which the driver cannot directly view.

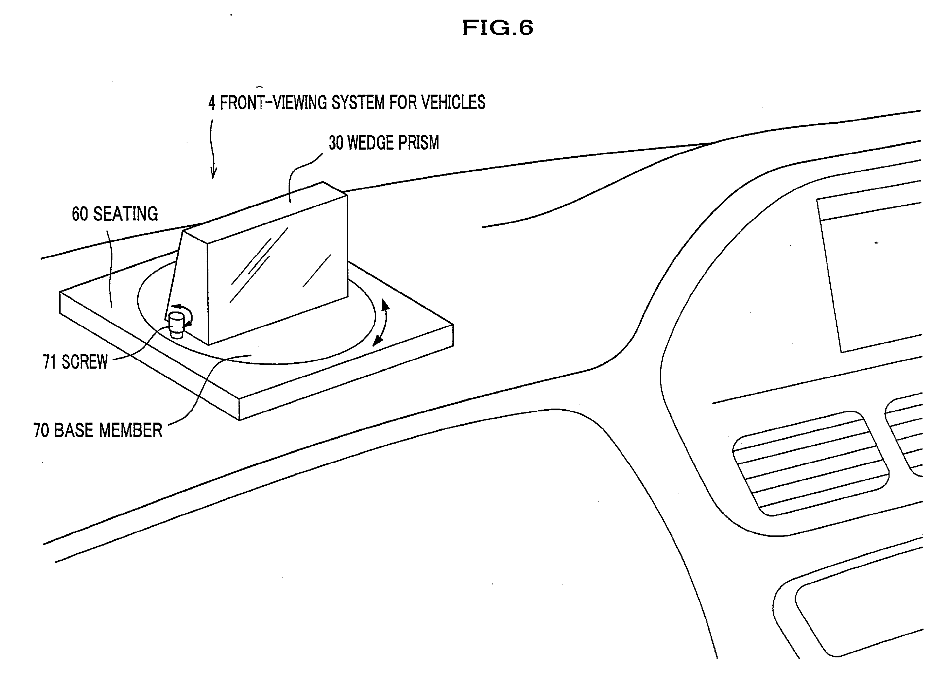

Additionally, as examples of a rear-viewing system for vehicles by which a driver can indirectly view an area in the rear direction, a system configured by mounting a prism on a rear window and a system configured by attaching mirrors on a rear spoiler and rear window have been known. Incidentally, the former system is described in Japanese Unexamined Patent Application Publication No. 8-2339 (Fig 14) and No. 8-104177 (paragraph No. 0007, Figs 1 to 3) , and the latter system is described in No. 9-66772 (paragraph Nos. 0012 to 0026, Figs. 1 to 12).

However, in the above front-viewing system for vehicles with a Fresnel prism attached on a visor, narrow grooves formed on the Fresnel prism may scatter rays incident from undesired directions, so that flare or a blank image are generated on the prism. As a result, the viewability of the system may be considerably deteriorated. Further, the problem that the scatter of the incident rays excessively deteriorates the viewability is also applicable to other viewing systems using a Fresnel lens.

It is considered that the above rear-viewing systems for vehicles described in the Publications are diverted to front-viewing systems for vehicles. In this case, however, the rear-viewing systems cause a problem that another blind spot is created. Concretely, the above rear-viewing systems typically secured to a rear window, etc. obstructs the view of a driver when being not used. Consequently, diverting the rear-viewing systems to front-viewing systems is not suitable in that the diverted systems obstruct driver's front view directly obtained through a front window when they are not used.

Moreover, any of the above viewing systems needs a mechanism which adjusts the position of the prism, etc. in order to adapt to the size or posture of a driver, and some of the systems are provided with a Fresnel lens or prism which is difficult to machine. This results in increases in fabricating costs and, thus causes a problem that customer's requests for low cost products cannot be satisfied.

In consideration of the above problems, the present invention has been made. Specifically, an aspect of the present invention is to provide a front-viewing system for vehicles with high performance and low fabricating costs, by which a driver can indirectly view a region below a lower limit line, the lower limit line denoting a lower limit of an area which the driver can view in the forward direction. Further, another aspect of the present invention is to provide the front-viewing system which does not obstruct the driver's view directly obtained through a front window when being unnecessary.

According to a feature of the present invention for overcoming the above problems, provided is a front-viewing system for vehicles which is placed between an eye point of a driver and a front end of a vehicle, and which allows the driver to indirectly view the region below the lower limit line. Further, the front-viewing system includes a wedge prism positioned above the lower limit line, and the wedge prism has a function of refracting rays traveling from a front end of the vehicle toward the eye point of the driver.

This front-viewing system for vehicles leads rays traveling from the front of the vehicle toward the eye point of the driver through the wedge prism. Here, the wedge prism is positioned above the lower limit line, so that rays traveling from a region (blind spot) located below the lower limit line is led to the eye point of the driver. This enables the driver to indirectly view the region which the driver cannot directly view. Also, the front-viewing system does not scatter rays incident from undesired directions in contrast to systems constituted of Fresnel lens or prism and, therefore always exhibits great viewing performance. Besides, since the wedge prism has a simpler shape than that of a Fresnel prism, the wedge prism is easy to machine, making it possible to provide the low-cost front-viewing system for vehicles. Incidentally, it is preferable that a whole of the wedge prism is positioned above the lower limit line, but as long as at least one part thereof is positioned thereabove, the driver can view the part of the wedge prism, which is positioned above the lower limit line, and as a result, can indirectly view the region below the lower limit line.

According to another feature of the present invention, the front-viewing system for vehicles further includes an accommodation mechanism that accommodates the wedge prism below the lower limit line.

The accommodation mechanism allows the wedge prism to be accommodated below the lower limit line when the driver does not view the wedge prism. This means that accommodating the wedge prism therebelow does not cause interference of driver's view obtained directly through a front window in the forward direction.

According to still another feature of the present invention, the front-viewing system for vehicles further includes at least one of a vertical position adjusting mechanism for adjusting a position of the wedge prism in a vertical direction, a transverse position adjusting mechanism for adjusting the position of the wedge prism in a transverse direction, and an orientation adjusting mechanism for adjusting an orientation of a refraction plane of the wedge prism.

The front-viewing system can always provide suitable view to a driver, even if the driver changes his or her posture or seating position, or another driver uses the vehicle.

According to yet another feature of the present invention, the front-viewing system for vehicles further includes an accommodation mechanism for accommodating the wedge prism below the lower limit line, and a position holding mechanism for memorizing a position of the wedge prism and an orientation of the refraction plane thereof prior to accommodation of the wedge prism. Here, when the accommodated wedge prism is made to return to an available state, a position of the wedge prism and an orientation of the refraction plane thereof are adjusted to the position of the wedge prism and the orientation of the refraction plane thereof that has been memorized in the position holding mechanism.

The front-viewing system can always provide suitable view to a driver, even if the driver changes his or her posture or seating position, or another driver uses the vehicle. Further, the front-viewing system memorizes a position of the wedge prism and an orientation of the refraction plane thereof and, then returns a position of the wedge prism and an orientation of the refraction plane thereof to the memorized position and orientation when being made to return from the accommodated state to the available state.

The front-viewing system for vehicles according to the present invention allows a driver to indirectly view the region below the lower limit line, the lower limit line designating a lower limit of an area which the driver can directly view in the forward direction. Further, since this front-viewing system does not scatter rays incident from undesired directions in contrast to systems with Fresnel lens or prism, the front-viewing system presents greater viewing performance than the systems with Fresnel lens or prism.

Furthermore, the front-viewing system for vehicles according to preferred embodiments of the present invention does not obstruct the view obtained directly through a front window when being not necessary.

Preferred embodiments of the present invention will now be described by way of example only and with reference to the accompanying drawings in which:
FIG. 1 is a side view depicting a front-viewing system for vehicles according to the present invention, and a viewing field obtained therewith;
Fig. 2 is a schematic view depicting the front-viewing system for vehicles according to the present invention;
FIG. 3 is a side view depicting the front-viewing system for vehicles according to the present invention;
FIG. 4 is a schematic view depicting a modification example of the front-viewing system for vehicles according to the present invention;
FIG. 5 is a schematic view depicting another modification example of the front-viewing system for vehicles according to the present invention; and
FIG. 6 is a schematic view depicting still another modification example of the front-viewing system for vehicles according to the present invention.

A front-viewing system 1 for vehicles in this embodiment designates a system by which a driver H can indirectly view a part S2 (a shaded region in Fig. 1) of a region (hereinafter, referred to as "blind spot") S1 below a lower limit line S, as shown in Fig. 1. Here, the lower limit line S indicates a lower limit of an area which a direct can directly view in the forward direction. Additionally, the front-viewing system 1 is placed on an instrument panel P.

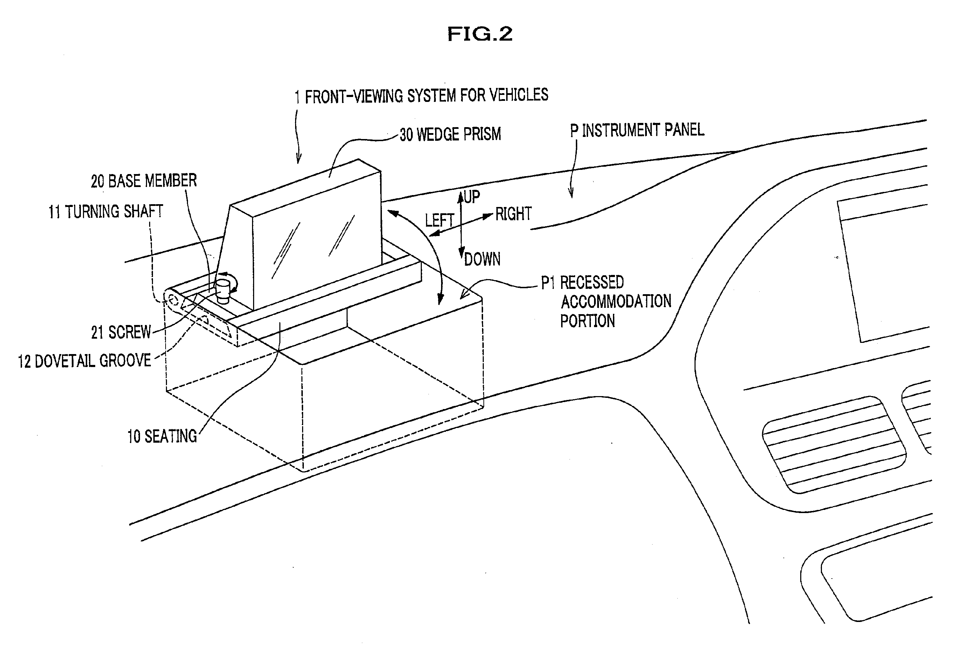

The front-viewing system 1 for vehicles includes a seating 10 attached to an edge of a recessed accommodation portion P1 formed on the instrument panel P, a base member 20 mounted on the seating 10, and a wedge prism 30 secured on a upper face of the base member 20 in an upright position, as shown in Fig. 2.

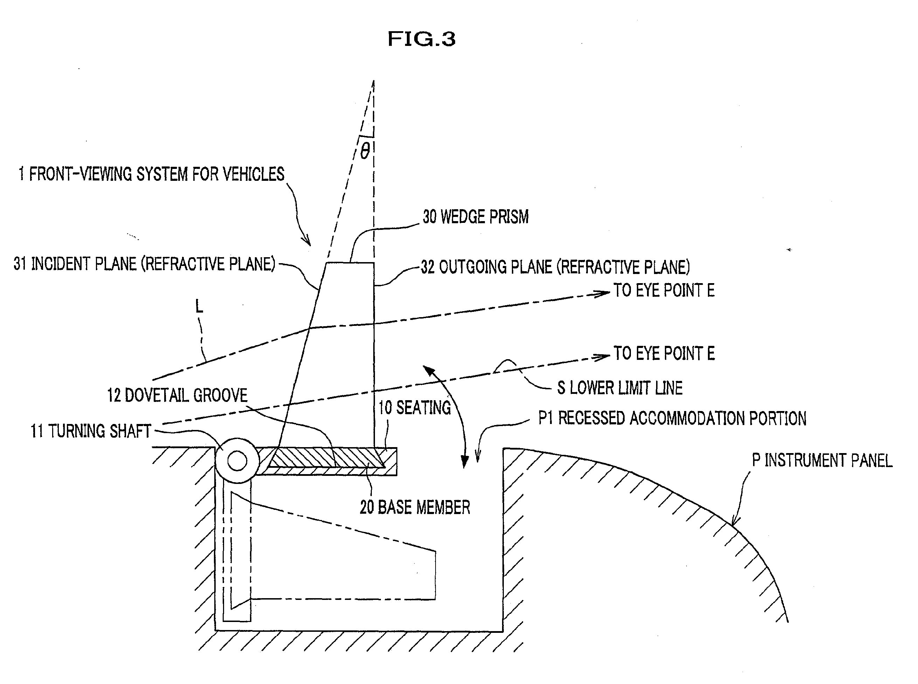

The seating 10 is attached to the edge portion of the recessed accommodation portion P1 through a turning shaft 11, and can be turned down or up. As shown in Fig. 3, the recessed accommodation portion P1 is formed below the lower limit line S, and when the front-viewing system 1 for vehicles is in an available state, if the driver H grabs the seating 10 or wedge prism 30 and turns it down, then the wedge prism 30 is accommodated below the lower limit line S. Specifically in this embodiment, the seating 10 which is attached in a turn-variable mode serves as an accommodation mechanism that accommodates the wedge prism 30 below the lower limit line S. On the other hand, when the front-viewing system 1 for vehicles is in an accommodated state, if the driver H grabs the seating 10 or wedge prism 30 and turns it up to the upright position, the front-viewing system 1 returns to be in the available state.

Moreover, the turning axis 11 is provided with a so-called "clip-stop mechanism", so that it can temporarily be fixed in any given positions. Specifically, when the driver H grabs the seating 10 or wedge prism 30 and turns it up or down, refractive planes 31, 32 of the wedge prism 30 are tilted upwardly or downwardly, and if the driver H releases his or her hand off the seating 10 or wedge prism 30 in any given position, then the refractive planes 31, 32 stay as it is. Therefore, in this embodiment, the seating 10 serves as an orientation adjusting mechanism that adjusts the orientations of the refractive planes 31, 31 of the wedge prism 30.

The seating 10 has therein a dovetail groove 12 with a trapezoid cross section, into which the base member 20 with a trapezoid cross section is fitted so as to slide in the transverse direction, as shown in Fig. 2. Also, the base member 20 has an end in which a screw hole (not shown) is formed, into which a screw 21 is screwed. Incidentally, if the screw 21 is loosened, then the base member 20 can be slid from side to side, and otherwise the base member 20 is fixed to the seating 10. It is noted that, in this embodiment, both the seating 10 and the base member 20 serve as a transverse position adjusting mechanism that adjusts the position of the wedge prism 30 in the transverse direction.

The wedge prism 30 has a function of refracting rays L traveling from the front of the vehicle toward the eye point E of the driver H (see Fig.1) , as shown in Fig. 3. In this embodiment, the majority area of the wedge prism 30 is positioned above the lower limit line S. Additionally, the wedge prism 30 has a refractive plane 31 that is inclined up while facing toward the front of the vehicle (thereinafter, referred to as "incident plane 31" as appropriate), and refractive plane 32 that faces toward the rear of the vehicle (thereinafter, referred to as "outgoing plane 32" as appropriate). An angle θ which the incident plane 31 forms with the outgoing plane 32 (thereinafter, referred to as "apex angle θ") needs to be set such that an region below the lower limit line S is reflected on the outgoing plane 32 as viewed from the eye point E of the driver H, and this apex angle θ is typically about 15 to 30 degrees. Here, the apex angle θ needs to be set in accordance with a size of a vehicle, etc. as appropriate, but as a general tendency, this angle θ is increased as the tilting angle of a hood A1 (see Fig. 1) relative to a ground is increased, whereas it is decreased as the length of the hood A1 is extended.

In the front-viewing system 1 for vehicles configured as described-above, when the wedge prism 30 is placed above the lower limit S, the wedge prism 30 refracts rays L from the blind spot S1 (see Fig. 1) on the incident and outgoing planes 31, 32 and, then leads the refracted rays to the eye point E of the driver H, as shown in Fig.3. This enables the driver H to indirectly view the part S2 (see Fig. 1) of the blind spot S1 which the driver H cannot directly view, by viewing the outgoing plane 31 of the wedge prism 30. Referring to Fig. 1, the driver H cannot directly view an obstacle A2 and a curb A3 below the lower limit line S, but can indirectly view them by use of the front-viewing system 1.

Furthermore, the front-viewing system 1 for vehicles does not scatter rays incident from undesired directions in contrast to systems constituted of a Fresnel lens or prism and, therefore always exhibits great viewing performance. Besides, since the wedge prism 30 has a simpler shape than that of a Fresnel prism, the wedge prism 30 is easy to machine, making it possible to provide the low-cost front-viewing system 1 for vehicles.

Moreover, the front-viewing system 1 has such a structure that the wedge prism 30 can be accommodated below the lower limit line S, as shown in Fig. 3. Such structure allows the wedge prism 30 to be accommodated into the recessed accommodation portion P1 formed below the lower limit line S when the driver H does not view the wedge prism 30. This is how the wedge prism 30 does not obstruct any region which the driver H directly views through a front window W (refer to Fig. 1). Furthermore, the above structure simplifies the interior of the vehicle, when the wedge prism 30 is not used, for example, the vehicle runs, and further, does not make a driver aware of the existence of the wedge prism 30. As a result, the front-viewing system 1 gives no unnecessary stress to a driver even if the driver is transferred from another car without the front-viewing system 1.

Although not shown in the figures, providing a motor in the turning axis 11 of the seating 10 enables the wedge prism 30 to be moved by electromotion. Also, the motor may be worked in accordance with vehicle speed. Specifically, by providing a speed sensor (not shown) , the wedge prism 30 is made to form an upright position by the forward rotation of the motor when the vehicle speed sensed by the speed sensor falls within a predetermined value, and otherwise it is made to form an accommodated position by the reverse rotation of the motor.

Although not shown in the figures, as the accommodation mechanism of the wedge prism 30, a so-called "push-open mechanism" may be employed. Specifically, the push-open mechanism is made up of a spring that is wound around the turning axis 11 of the seating 10, and a latch mechanism that holds the accommodated position of the wedge prism 30 and that is provided between the seating 10 and the recessed accommodation portion P1. With such push-open mechanism, once the accommodated wedge prism 30 is pressed down, the accommodated position is released, thereby returning the wedge prism to the available state by means of urge generated by the spring.

Additionally, a position holding mechanism that memorizes the position of the seating 10 prior to its accommodation may be provided, so that the incident and outgoing planes 31, 32 returned to the upright position from the accommodation have the same orientations as those before the accommodation. The position holding means may be, for example, a stopper (not shown) which blocks the upward turning of seating 10 and which is provided in the turning shaft 11, etc. Alternatively, it may be a memory device which memorizes information about the position of the seating 10 during use if the wedge prism is moved by electromotion. Thanks to these position holding mechanisms, the orientations of the incident and outgoing planes 31, 32 of the wedge prism 30 are not required to be adjusted when the accommodated wedge prism 30 returns to the available state.

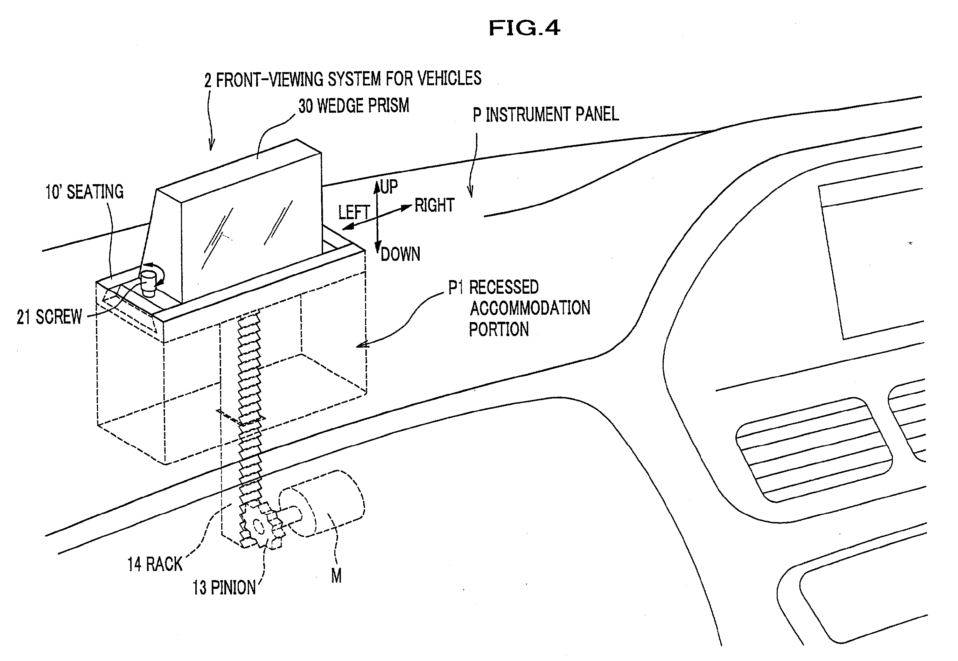

In this embodiment, as an example of the accommodation mechanism that accommodates the wedge prism 30 below the lower limit line S, the seating 10 attached to the recessed accommodation portion P1 in a turn variable mode is cited. However, it is obvious that the accommodation mechanism is not limited to this example. To give an example, it may be an elevator type accommodation mechanism provided so as to move in the vertical direction, as a front-viewing system for vehicle 2 shown in Fig. 4. This type of accommodation mechanism includes a seating 10', a rack 14 disposed perpendicular to the lower surface of the seating 10', a pinion 13 engaged with the rack 14, and a motor M which imparts rotation power to the pinion 13. A rotation of the motor M in an appropriate direction moves the seating 10' (that is, wedge prism 30) upwardly or downwardly, whereby the wedge prism 30 is made to retract into the recessed accommodation portion P1 or to return to the available state. Naturally, the motor M may be worked in accordance with vehicle speed. This type of accommodation mechanism also serves as a vertical position adjusting mechanism that adjusts the vertical position of the wedge prism 30.

The elevator type accommodation mechanism can employ the push-open mechanism as well. Specifically, this mechanism includes a spring disposed below the seating 10' and a latch mechanism that is provided between the seating 10' and the recessed accommodation portion P1 and that holds the position of the accommodated wedge prism 30, in stead of the rack 14, pinion 13 and the motor M. With this elevator type accommodation mechanism, once the accommodated wedge prism 30 is pressed down, the locked latch mechanism is released, thereby returning the wedge prism 30 to the available state by means of urge generated by the spring.

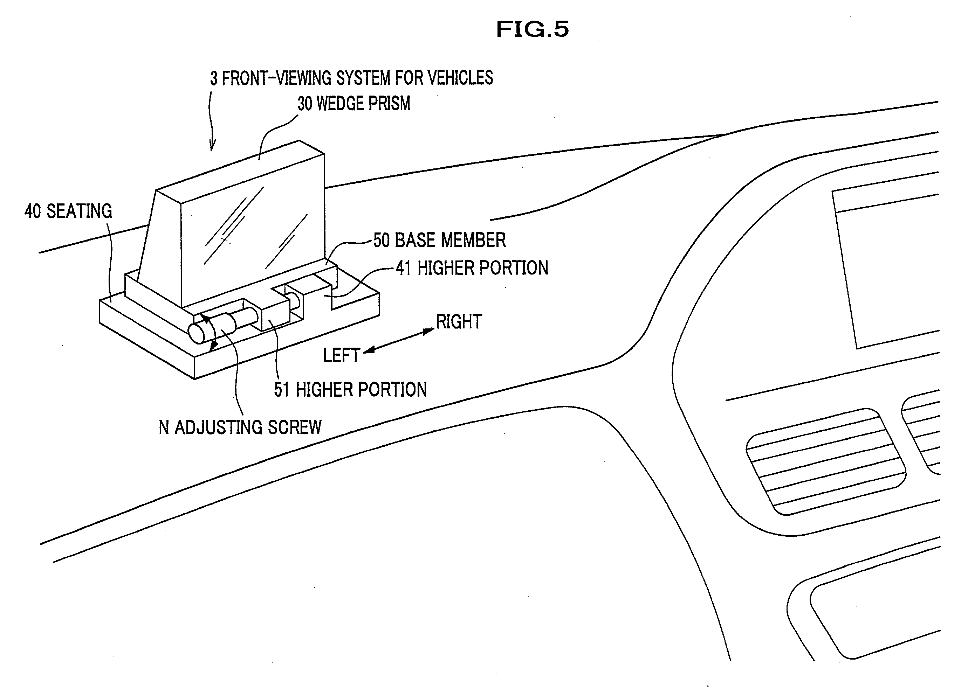

The transverse position adjusting mechanism which adjusts the position of the wedge prism 30 in the transverse direction is not limited to one shown in Fig. 2 or 4, but appropriate modifications may be made. For example, as the front-viewing system for vehicles 3 shown in Fig. 5, the higher portions 41, 51 of the seating 40 and of the base member 50 are coupled to each other through an adjusting screw N, and the rotation of the adjust screw N in an appropriate direction slides the base member 50 in the transverse direction.

Unless another blind spot is created by the wedge prism 30 in the available state which is large enough to obstruct the view of the driver H, the accommodation mechanism that accommodates the wedge prism 30 may be omitted as with the front-viewing system for vehicles 3.

The orientation adjusting mechanism that adjusts the orientations of the incident and outgoing planes 31, 32 (see Fig. 3) is not limited to one shown in Figs 2 or 3, but appropriate modifications may be made. For example, as a front-viewing system for vehicles 4, the orientation adjusting mechanism may be constituted of a seating 60 with a circular depression, and a circular base member 70 fitted into the depression of the seating 60 in slide-and-turn-variable mode. Incidentally, the base member 70 has a screw hole (not shown) formed therein, into which a screw 71 is screwed. Here, if the screw 71 is loosened, then the base member 70 can be swiveled in the circumferential direction. In this state, when the base member 70 is turned in the clockwise or anticlockwise direction, the refractive planes 31, 32 of wedge prism 30 are swiveled in the clockwise or anticlockwise direction. On the other hand, if the screw 71 is secured, then the base member 70 is fixed to the seating 60.

The above-described front-viewing system 1 for vehicles to 4 are configured to be attached to the instrument panel P located between the eye point E of the driver H and the front end of the vehicle, but the front-viewing system according to the present invention is not limited to these structures. For example, the system may be placed on the hood A1.

Although the preferred embodiment of the present invention has been described in detail, it should be understood that various changes, substitutions and alterations can be made therein without departing from the scope of inventions as defined by the appended claims.

## Claims

1. A front-viewing system for vehicles by which a driver can indirectly view a region located forward of a vehicle below a lower limit line, the lower limit line designating a lower limit of an area which the driver can directly view, the front-viewing system for vehicles being placed between an eye point of the driver and a front end of the vehicle, the front-viewing system for vehicles comprising:
a wedge prism for refracting rays travelling from an area in front of the vehicle toward the eye point of the driver, the wedge prism being positioned above the lower limit line.

2. A front-viewing system for vehicles according to claim 1, further comprising:
an accommodation mechanism for accommodating the wedge prism below the lower limit line.

3. A front-viewing system for vehicles according to claim 1, further comprising at least one of:
a vertical position adjusting mechanism for adjusting a position of the wedge prism in a vertical direction;
a transverse position adjusting mechanism for adjusting the position of the wedge prism in a transverse direction; and
an orientation adjusting mechanism for adjusting an orientation of a refraction plane of the wedge prism.

4. A front-viewing system for vehicles according to claim 3, further comprising:
an accommodation mechanism for accommodating the wedge prism below the lower limit line; and
a position holding mechanism for memorizing a position of the wedge prism and an orientation of the refraction plane thereof prior to accommodation of the wedge prism,
wherein when the accommodated wedge prism is made to return to an available state, a position of the wedge prism and an orientation of the refraction plane thereof are adjusted to the position of the wedge prism and the orientation of the refraction plane thereof that has been memorized in the position holding mechanism.
